# EUROPEAN PATENT SPECIFICATION

(11) **EP 0 467 223 B1**
(45) Date of publication and mention of the grant of the patent: **05.07.1995**
(21) Application number: 91111586.3
(22) Date of filing: 12.07.1991
(51) Int. Cl.: H04N 17/00, H04N 5/202

(54) **Image signal average picture level detecting apparatus**
Schaltung zur Ermittlung des durchschnittlichen Pegels eines Bildsignals
Circuit pour détecter le niveau moyen d'un signal d'image

(30) Priority: 19.07.1990 JP 189471/90
(43) Date of publication of application: 22.01.1992
(73) Proprietor: MATSUSHITA ELECTRIC INDUSTRIAL CO., LTD., Kadoma-shi, Osaka-fu, 571 (JP)
(72) Inventor: Kageyama, Atsuhisa, Ibaraki-shi, Osaka-fu (JP); Sadamatsu, Hideaki, Hirakata-shi, Osaka-fu (JP)
(74) Representative: Eisenführ, Speiser & Partner

(56) References cited:
- DD-A- 49 023
- GB-A- 1 451 830
- US-A- 4 543 614

## Description

### BACKGROUND OF THE INVENTION

The present invention generally relates to an image signal average picture level detecting apparatus which may be used in the detection of the average picture level (hereinafter referred to as APL) of the image signals necessary in a case where the gradation correcting operation and so on of the image brilliance signals are effected in image appliances such as television image receiver, video tape recorder and so on.

As the color television image receivers becomes larger in size in recent years, various gradation correcting apparatuses are used to correct the gradation of the image signals for showing the images more clearly and to expand the dynamic range of the images on the CRT. When the gradation correcting operation is effected by the gradation correcting apparatuses, it is necessary to detect the average picture level of the image brilliance signals. Therefore, the image signal average picture level detecting apparatuses are considered more important.

The conventional image signal average picture level detecting apparatus as described hereinabove will be described hereinafter with reference to the drawings.

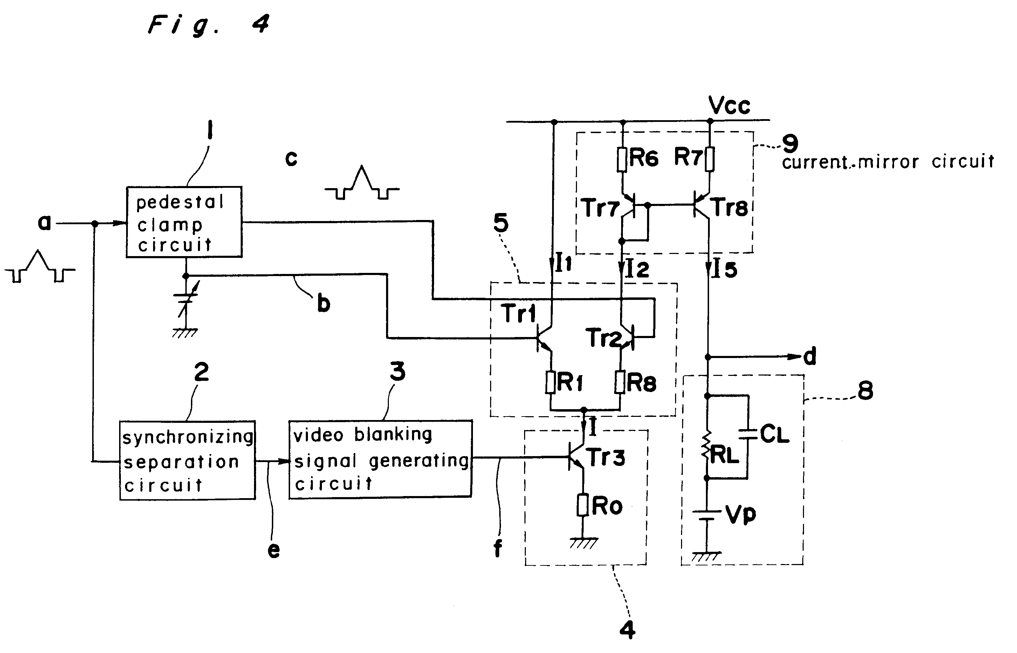

Fig. 4 shows the block diagram of the conventional image signal average picture level detecting apparatus. In Fig. 4, reference numeral 1 is a pedestal clamping circuit for clamping the pedestal out of the input image brilliance signal a into the pedestal voltage b. Reference numeral 2 synchronous separating circuit for separating the synchronous signal e from the input image brilliance signal a. Reference numeral 3 is an image blanking signal generating circuit for wave forming the synchronous signal e so as to generate the image blanking signal f. Reference characters Tr3 and R0 constitute a constant current supply 4 for generating a current I when the image blanking signal f is in the image period. The current is not generated when the image blanking signal f is in the image blanking period. The constant power supplies Tr1, Tr2, R1, R8 constitute a differential amplifying circuit 5 for comparing the pedestal voltage b with the clamping-after image brilliance signal c so as to generate currents I1 and I2 into the collectors of the respective transistors. As the amplitude of the image brilliance signal is larger, the current I2 increases, and the current I1 operates so as to decrease by the portion thereof. The constant power supplies Tr7, Tr8, R6, R7 constitute a current mirroring circuit 9, and the current I5 equal to the current I2 which changes in accordance with the amplitude of the image signal is generated into the collector of the Tr8. The constant power supplies R_{L}, C_{L} and V_{P} convert the current I5 into a voltage and average them so as to constitute a smoothing circuit 8 for generating an average picture level d.

The image signal average picture level detecting apparatus constructed as described hereinabove will be described hereinafter in its operation.

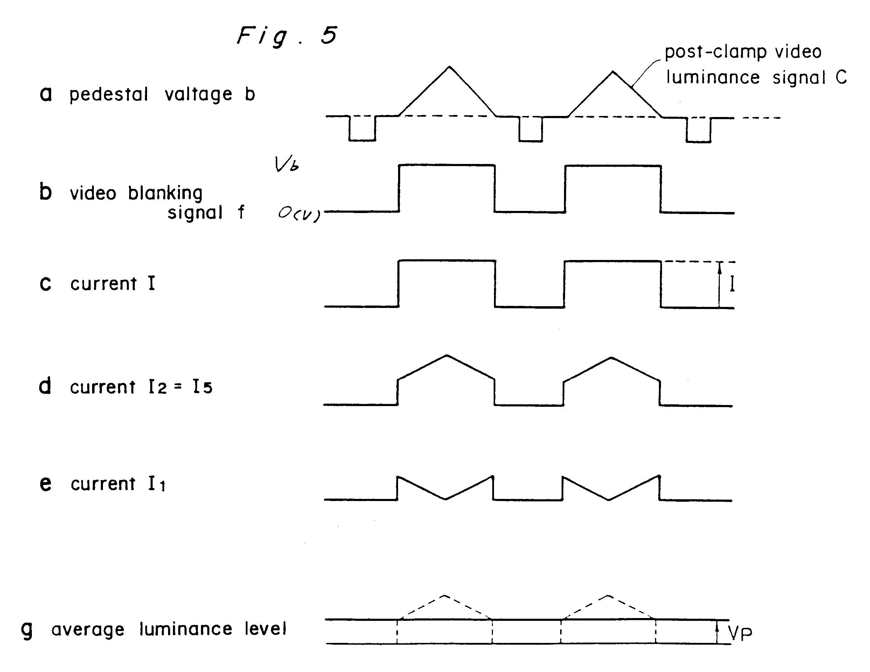

The input image brilliance signal a is inputted into a synchronous separating circuit 2, is synchronously separated so as to obtain a synchronous signal e. The synchronous signal e is inputted into the image blanking signal generating circuit 3, is shaped in wave form, and thereafter, the image blanking signal f is obtained. The image blanking signal f is assumed to become approximately 0 volt during a blanking period as shown in Fig. 5, and to become a fixed voltage Vb during an image period. The signal f is inputted into the base of the Tr3. The constant current I which becomes${\text{I = (Vb-V}}_{\text{BE}} \text{) / Ro}$
flows into the collector of the Tr3 during an image period. The V_{BE} shows the base interemitter voltage of the transistor, with any transistor being adapted to take approximately the same value. In the image blanking period, the base voltage of the Tr3 is approximately 0 volt, so that the Tr3 becomes cut off, thus resulting in I = 0.

The input image brilliance signal a is inputted into the pedestal clamping circuit 1, is clamped into the pedestal voltage b and is outputted as the clamping-after image brilliance signal c. Namely, the pedestal level of the signal c becomes equal to the pedestal voltage b. The pedestal voltage b and the clamping-after image brilliance signal c are respectively inputted into the bases of the Tr1 and the Tr2. Since the transistors are the differential amplifying circuit, two relation formulas of$\text{I = I1 + I2}$${\text{V}}_{\text{B1}} {\text{- V}}_{\text{B2}} \text{= R1 · I1 - R8 · I2}$
are approximately established, resulting in R1 = R8, with the base voltage of the Tr1 being V_{B1}, the base voltage of the Tr2 being V_{B2}. For example, in a case of APL = 0%, the formula becomes as follows.$\text{I1 = I2 = I/2}$

The current I2 is inputted into the current mirroring circuit by the Tr7 and the Tr8, and the current I2 flowing into the collector of the Tr7 may be moved by 1 : 1 into the collector of Tr8. Namely, the formula becomes$\text{I2 = I5}$

The current I5 flows in accordance with the image picture level, is converted into the voltage by the R_{L} and C_{L}, simultaneously is averaged, and is outputted as the average picture level d.

Assume that the output average picture level voltage d at this time is V_{APL}, and the formula becomes as follows.${\text{V}}_{\text{APL}} {\text{= V}}_{\text{P}} {\text{+ R}}_{\text{L}} \text{∫I5dt}$

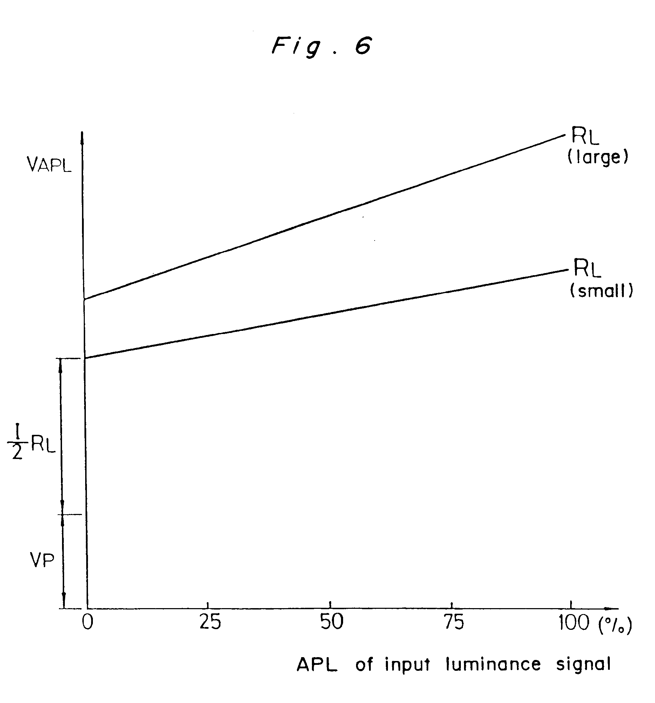

Substitute the (3), (5) formulas into the (6) formula, assume that R1 = R8 = R, and the formula is provided as follows,${\text{V}}_{\text{APL}} {\text{= V}}_{\text{P}} {\text{+ R}}_{\text{L}} {\text{/ 2R X ∫ (V}}_{\text{B2}} {\text{- V}}_{\text{B1}} {\text{) dt + R}}_{\text{L}} \text{· I/2}$
It is found out that the average value of the image signal is obtained in a second term as intended. The relationship between the input picture level (V_{B2} - V_{B1}) and the V_{APL} is shown in Fig. 6. Also, Fig. 5 shows the performance wave form chart.

In the above described construction as described hereinabove, the offset voltage of R_{L} · I/2 is caused in the third term in the (7) formula showing the output average picture level voltage d. The average picture level voltage in the APL = 0% which becomes a reference of the operation of the circuit changes by the R_{L} and the current I of the constant current supply as shown in Fig. 6. Also, when the output amplitude is tried to be varied by the increase and decrease in the value of the R_{L}, there is a problem in that the output voltage of the point of APL = 0% is also changed at the same time.

### SUMMARY OF THE INVENTION

Accordingly, the present invention has been developed with a view to substantially eliminating the above discussed drawbacks inherent in the prior art, and has for its essential object to provide an improved image signal average picture level detecting apparatus which is capable of optional selection of the output voltage when the average picture level of the image signal is zero (APL = 0%).

Another important object of the present invention to is to provide an improved image signal average picture level detecting apparatus of the type referred to above, which is capable of optionally setting the output amplitude without moving of the zero point in the average picture level.

These objects are achieved by the subject-matter claimed in the single claim.

According to the present invention, there is provided an image signal average picture level detecting apparatus which is provided with a first current mirroring circuit and a second current mirroring circuit instead of a current mirroring circuit of the conventional construction.

By the above described construction, the present invention uses a first current mirroring circuit as the load (active load) of the differential amplifying circuit so as to supply the output thereof into the smoothing circuit by a second current mirroring circuit. The present invention makes the current, which flows through the second current mirroring circuit, zero at the time of APL = 0% so that the direct current voltage of the output and the detection voltage amplitude may be optionally set without producing an offset voltage in the output average picture level voltage.

### BRIEF DESCRIPTION OF THE DRAWINGS

These and other objects and features of the present invention will become apparent from the following description taken in conjunction with the preferred embodiment thereof with reference to the accompanying drawings, in which;
Fig. 1 is a block diagram of an image signal average picture level detecting apparatus in one embodiment of the present invention;
Fig. 2 is a performance wave form chart thereof;
Fig. 3 is an average picture level detecting characteristics chart;
Fig. 4 is a block diagram of the conventional image signal average picture level detecting apparatus;
Fig. 5 is a performance wave form chart thereof; and
Fig. 6 is an average picture level detection characteristics thereof.

### DETAILED DESCRIPTION OF THE INVENTION

Before the description of the present invention proceeds, it is to be noted that like parts are designated by like reference numerals throughout the accompanying drawings.

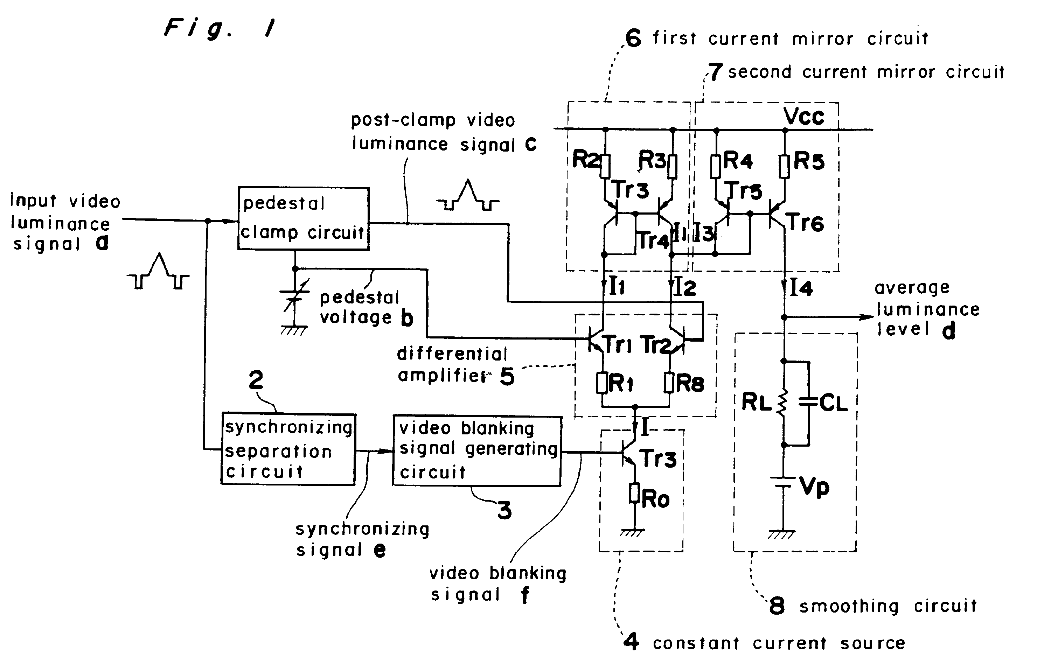

Referring now to the drawings, there is shown in Fig. 1, an image signal average picture level detecting apparatus according to one preferred embodiment of the present invention. In Fig. 1, it includes Tr3, Tr4, R2, R3, a first current mirroring circuit 6, which is connected (commonly referred to as an active load) as the load of the differential amplifying circuit 5 by the Tr1, the Tr2, the R1, the R8 so as to function to flow the collector current of the Tr3 into the collector current of the Tr4 in R2 = R3. The Tr5, the Tr6, the R4, the R5 are a second current mirroring circuit 7. The difference between the collector current of the Tr4 and the collector current of the Tr2 is adapted to move into the collector current of the Tr6 with the collector of the Tr5 being connected with the collector of the Tr4. As the other construction is the same as the conventional embodiment, the description thereof will be omitted.

The image signal average picture level detecting apparatus constructed as described hereinabove will be described hereinafter in its operation with the use of Fig. 1, Fig. 2 and Fig. 3.

The pedestal clamping circuit, the generation of the constant current by the Tr3, and the operation of the differential amplifying circuit by the Tr1 and Tr2 are the same as the conventional embodiment. In the present invention, the first current mirroring circuit 6 by the Tr3, the Tr4, the R2, the R3 is inserted as an active load into the collectors of the Tr1 and the Tr2 as shown in Fig. 1, and also, the inputs of the second current mirroring circuit 7 by the Tr5, the Tr6, the R4, the R5 are connected into the collectors of the Tr4 and the Tr2.$\text{R2 = R3 = R4 = R5}$
Because of the characteristics of the current mirroring circuit, approximately$\text{I1 = I1′ and I3 = I4}$
Also,$\text{I2 + I1′ + I3}$
From the (9), (10) formulas and the (2), (3) formulas,${\text{I4 = (V}}_{\text{B2}} {\text{- V}}_{\text{B1}} \text{) / R}$
where R1 = R8 = R.

As in the (6) formula, the output average picture level voltage V_{APL} is${\text{V}}_{\text{APL}} {\text{= V}}_{\text{P}} {\text{+ R}}_{\text{L}} \text{∫ I4dt}$

Substitute the (11) formula into the (12) formula, and the following formula is obtained.${\text{V}}_{\text{APL}} {\text{= V}}_{\text{P}} {\text{+ R}}_{\text{L}} {\text{/R X ∫ (V}}_{\text{B2}} {\text{- V}}_{\text{B1}} \text{) dt}$
In the present invention, the output average picture level voltage V_{APL} is represented as the total of the optional direct current voltage V_{P} and the average picture level component of the image signal of the second term, thus showing that it does not have such offset voltage as in the (7) formula of the conventional embodiment. The output voltage V_{APL} at the time of an average picture level APL = 0% (V_{B2} -V_{B1} = 0) may be optionally set by the variation in the V_{P} and also, the amplitude of said output voltage V_{APL} may be optionally set by the variation in the R_{L}.

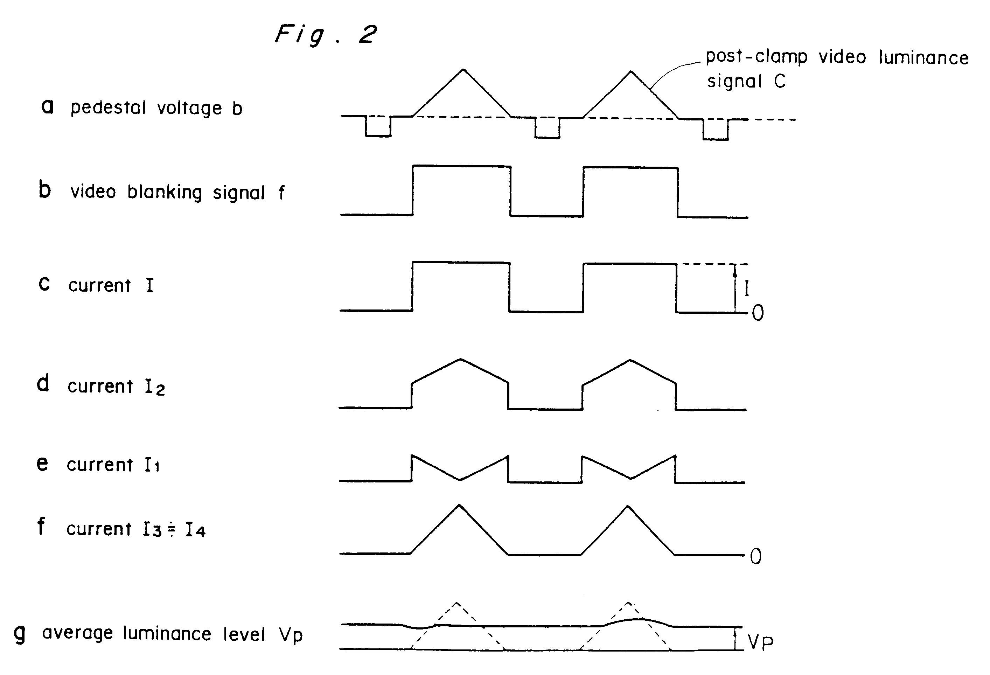

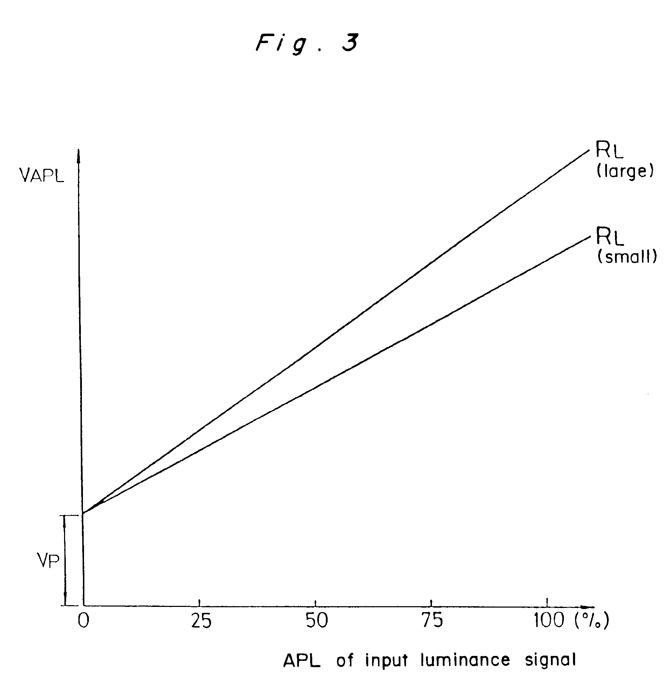

The above described performance wave form chart is shown in Fig. 2. Also, in Fig. 3, the relation of the (13) formula is shown as the relation between the average picture level of the input image signal and the output average picture level voltage V_{APL}.

As described hereinabove, in accordance with the present embodiment, the first current mirroring circuit 6 is used as the load (active load) of the differential amplifying circuit, instead of a current mirroring circuit 9 used in the conventional image signal average picture level detecting apparatus, the output is fed into the smoothing circuit by the second current mirroring circuit 7, so that the direct current voltage of the output average picture level may be set optionally without producing the offset voltage in the output average picture level voltage with the current flowing through the second current mirroring circuit 7 being provided as zero at the time of the APL = 0%.

In accordance with the present embodiment, the R4 equals the R5, but does not have to be equal to it. In this case, the output amplitude changes. Although the current mirroring circuit uses a 2 transistor type, it may use a 3 transistor type, a current mirror of WILSON and so on.

Although the image blanking signal generating circuit generates an image blanking signal f from it with the synchronous signal e which has synchronously separated the input signal by the synchronous separating circuit being made an input, the image blanking signal f may be shaped in wave form from it and be generated with the fly-back pulse as the input signal in the case of the television receiver.

As is clear from the foregoing description, according to the arrangement of the present invention, by the provision of a synchronous separating circuit, an image blanking signal generating circuit, an image period constant current generating circuit, a pedestal clamping circuit, a current supply, a differential amplifying circuit, a first current mirroring circuit, a second current mirroring circuit, and a smoothing circuit, the output voltage when the average picture level of the image signal is zero may be optionally selected, and the output amplitude may also be set optionally, thus realizing an image signal average picture level detecting apparatus, with large effects in the practical use.

## Claims

1. An image signal average picture level detecting apparatus comprising a synchronous signal separating circuit (2) of an input image brilliance signal (a), an image blanking signal generating circuit (3) for generating image blanking signals (f) from the synchronous signal outputs (e), an image period constant current generating circuit (4) for generating a constant current (I) only for the image period of the image signal under the control of the above described image blanking signal (f), a pedestal clamping circuit for clamping the pedestal of the above described input image brilliance signal (a) to a given pedestal voltage (b), a differential amplifying circuit (5) for taking the difference between the above described pedestal voltage (b) and the clamped input image brilliance signal (c) with the output current (I) of the above described image period constant current generating circuit (4) being provided as a current supply, a first current mirroring circuit (6) being connected as a load (active load) of the above described differential amplifying circuit (5), a second current mirroring circuit (7) for mirroring the current output by the above described first current mirroring circuit (6), and a smoothing circuit (8) for converting the output current (I4) of the above described second current mirroring circuit (7) into an output voltage (d) so as to smooth it, wherein the output voltage (d) may be optionally selected in a case when the average picture level of the image signal is zero, and the amplitude of the output voltage (d) may also be optionally set.

## Patentansprüche

1. Vorrichtung zum Detektieren der mittleren Bildhelligkeit eines Bildsignals, mit
einem Synchronsignal-Trennschaltkreis (2) eines Eingangs-Bildhelligkeitssignals (a),
einem Bildaustastsignal-Schaltkreis (3) zum Erzeugen von Bildaustastsignalen (f) aus den Synchronsignalausgängen (e),
einem Bildperioden-Konstantstrom-Erzeugungsschaltkreis (4) zum Erzeugen eines Konstantstroms (I) allein während der Bildperiode des Bildsignals unter der Steuerung des oben beschriebenen Bildaustastsignals (f),
einer Sockel-Klemmschaltung zum Halten des Sockels des oben beschriebenen Eingangs-Bildhelligkeitssignals (a) auf einer vorgegebenen Sockelspannung (b),
einem Differentialverstärkerschaltkreis (5), der die Differenz zwischen der oben beschriebenen Sockelspannung (b) und dem gehaltenen Eingangs-Bildhelligkeitssignal (c) bildet, wobei der Ausgangsstrom (I) des oben beschriebenen Bildperioden-Konstantstrom-Erzeugungsschaltkreises (4) als Stromversorgung arbeitet,
einem ersten Stromspiegelungsschaltkreis (6), der als Last (aktive Last) des oben beschriebenen Differentialverstärkerschaltkreises (5) angeschlossen ist,
einem zweiten Stromspiegelungsschaltkreis (7) zum Spiegeln des Stromausgangs des ersten Stromspiegelungsschaltkreises (6), und mit
einem Glättungsschaltkreis (8) zum Umwandeln des Ausgangsstroms (I4) des oben beschriebenen zweiten Stromspiegelungsschaltkreises (7) in eine Ausgangsspannung (d), um diese zu glätten, wobei die Ausgangsspannung (d) wahlweise für den Fall eingestellt werden kann, daß die mittlere Bildhelligkeit des Bildsignals gleich Null ist, und wobei die Amplitude der Ausgangsspannung (d) ebenfalls wahlweise eingestellt werden kann.

## Revendications

1. Appareil de détection du niveau d'image moyen d'un signal d'image, comprenant un circuit (2) de séparation des signaux de synchronisation d'un signal de luminance d'image d'entrée (a), un circuit (3) de production de signaux de suppression d'image servant à produire des signaux de suppression d'image (f) à partir des signaux de synchronisation de sortie (e), un circuit (4) de production de courant constant de période d'image servant à produire un courant constant (I) seulement pendant la période d'image du signal d'image sous commande du signal de suppression d'image (f) ci-dessus décrit, un circuit de fixation de niveau de suppression de ligne servant à fixer le niveau de suppression de ligne du signal de luminance d'image d'entrée (a) ci-dessus indiqué à une tension donnée de niveau de suppression de ligne (b), un circuit amplificateur différentiel (5) servant à produire la différence entre la tension de niveau de suppression de ligne (b) ci-dessus indiquée et le signal de luminance d'image d'entrée à niveau fixé (c), le courant de sortie (I) du circuit (4) de production de courant constant de période d'image ci-dessus indiqué étant fourni comme alimentation en courant, un premier circuit miroir de courant (6) étant connecté comme charge (charge active) du circuit amplificateur différentiel (5) ci-dessus indiqué, un deuxième circuit miroir de courant (7) servant à reproduire à l'identique le courant délivré par le premier circuit miroir de courant (6) ci-dessus indiqué, et un circuit de lissage (8) servant à transformer le courant de sortie (14) du deuxième circuit miroir de courant (7) ci-dessus indiqué en une tension de sortie (d) de façon à le lisser, où la tension de sortie (d) peut être choisie librement dans le cas où le niveau d'image moyen du signal d'image est nul, et l'amplitude de la tension de sortie (d) peut aussi être fixée librement.
